# EUROPÄISCHE PATENTSCHRIFT

(11) **EP 1 693 110 B1**
(45) Veröffentlichungstag und Bekanntmachung des Hinweises auf die Patenterteilung: **16.04.2008**
(21) Anmeldenummer: 06003363.6
(22) Anmeldetag: 20.02.2006
(51) Int. Cl.: B02C 18/18, A01B 33/10

(54) **Werzeug und Werkzeughalterung für Bodenfräsen**
Tool and tool holder for a rotary cultivator
Outil et porteur d'outil pour une cultivateur pour le sol

(30) Priorität: 22.02.2005 IT BZ20050006
(43) Veröffentlichungstag der Anmeldung: 23.08.2006
(73) Patentinhaber: SEPPI M. S.R.L., 39052 Caldaro BZ (IT)
(72) Erfinder: Seppi, Luciano, 39057 Appiano (BZ) (IT)
(74) Vertreter: Oberosler, Ludwig

(56) Entgegenhaltungen:
- US-A- 4 216 832
- US-A- 5 582 353
- US-A- 6 131 838
- US-A1- 2002 190 148

## Beschreibung

Die Erfindung bezieht sich auf ein Werkzeug und die entsprechende Werkzeughalterung für Bodenfräsen welche insbesondere, z.B. in der Landwirtschaft oder in der Forstwirtschaft, für die Bearbeitung des Bodens und/oder für die Zerkleinerung von Ästen und Büschen, für die Bodenverbesserung auf nicht bebauten Flächen oder für die Pflege des Unterholzes eingesetzt werden.

Fräsen dieser Art, welche aus einer Trommel oder einem Rotor bestehen welcher, gemäß einer zum Boden wesentlich parallelen Achse, rotiert und über Kraftübertragungsorgane, welche an die Zapfwelle eines selbstfahrenden Fahrzeuges angekuppelt sind, angetrieben werden, sind bekannt. Vom Rotor der Fräse ragen radial Halterungen ab welche zueinander parallel und entsprechend Ebenen angeordenet sind welche den Rotor quer durchdringen und axial versetzt sind.

Jede dieser Halterungen trägt ein Werkzeug welches, betreffend die Art und die Form, unterschiedlich sein kann und an der Halterung feststehend oder beweglich und austauschbar angebracht ist. Diese Werkzeuge arbeiten bei angetriebenem Rotor in einem bestimmten Abstand zur Außenfläche der Trommel oder des Rotors.

Um die abgenutzten Werkzeuge ersetzen oder die Werkzeuge einer bestimmten Art mit solchen einer anderen Art, welche für eine andere Bearbeitung geeignet sind, austauschen zu können, ist die direkte Befestigung des Werkzeuges am Werkzeughalter mittels Schrauben, oder die indirekte Befestigung des Werkzeuges mittels Einsatzstücke welche im Halter eingreifen und das Werkzeug in seinem Sitz am Halter zurückhalten, bekannt.

Aus der US 6,131,838 ist ein Werkzeug und ein entsprechender Werkzeughalter für Fräsen, für Hammermühlen und dergleichen bekannt bei welchem das Werkzeug am Werkzeughalter mittels Schraubenbolzen welche das Werkzeug durchdringen befestigt ist. Dieses bekannte Werkzeug weist eine ebene Rückenfläche auf von welcher, zueinander parallele, über diese Rückenfläche hinausragende, Achseln abstehen welche den entsprechenden Teil des Werkzeughalters abdecken. In montierter Stellung des Werkzeuges ist der untere Teil des Schneidplättchens des Werkzeuges in einem Sitz im Werkzeughalter derart versenkt, dass dieser Teil des Schneidplättchens durch eine, in Drehrichtung der Frästrommel, vorgelagerte Erhöhung des Werkzeughalters gegen das Auftreffen von Fräsmaterial abgedeckt und somit gegen Beschädigungen geschützt ist. Die genannte vorgelagerte Erhöhung wirkt also gleichsam als Schutzschild für den sich dahinter befindenden Werkzeugteil welcher im Sitz selbst weder an der Bodenfläche noch an der Rückenfläche der vorgelagerten Erhöhung auf-, beziehungsweise anliegt. Dieser Sitz in welchem der untere Teil des Werkzeuges Schutz findet, trägt in keiner Weise dazu bei die Befestigungsbolzen welche das Werkzeug durchdringen, bei Belastungen welche tangential auf den aus dem Halter vorstehenden Werkzeugteil wirken, aufzunehmen, beziehungsweise deren Verformung zu verhindern. Weiters ist die gezeigte und beschriebene Anordnung des Werkzeuges im Sitz des Werkzeughalters nicht geeignet für Belastungen welche wesentlich radial von außen auf das Werkzeug in Richtung Drehachse wirken aufzunehmen, solche Belastungen müssen ausschließlich von den Befestigungsbolzen aufgenommen werden da das Werkzeug nicht im Werkzeugsitz satt aufliegen kann. Die Befestigungsbolzen sind also bei der obgenannten Belastung wesentlich auf Scherung beansprucht.

Es ist bekannt dass während des Laufes der Fräse die Kräfte an den Werkzeugen und an den entsprechenden Haltern wesentlich innerhalb sich radial erstreckender Ebenen der Fräse wirken, die Praxis hat jedoch gezeigt, dass auch Kraftkomponenten in axialer Richtung wirken und dass es diese Kräfte sind welche öfters den Bruch der Befestigungselemente und eine beachtenswerte Abnützung an den Werkzeugen und auch an den Werkzeughaltern bewirken so, dass deren Dauer reduziert wird, Ausbesserungsarbeiten an den Halterungen erforderlich sind und der Austausch der Werkzeuge arbeitsaufwändiger wird. Beispielsweise ist es bei der Bodenbearbeitung möglich, dass das Werkzeug einer derartigen axialen Belastung ausgesetzt wird, dass dieses aus seinem Sitz austritt und somit die Bodenbearbeitung beeinträchtigt, wobei die Möglichkeit eines Bruches und/oder ein Loslösen des Werkzeuges mit gleichzeitigem oder anschließendem hohen Verschleiß der entsprechenden Halterung, gegeben ist.

Die Erfindung stellt sich die Aufgabe ein Werkzeug der vorher beschriebenen Art zu schaffen welches am entsprechenden Werkzeughalter derart angebracht ist, dass eine sichere Befestigung erreicht wird welche in kurzer Zeit und mittels einfacher Werkzeuge durchführbar ist wobei zusätzlich, nach Gebrauch, auch bei fortgeschrittenem Verschleiß des Werkzeuges, eine mühelose Demontage und ein Auswechseln des Werkzeuges, ohne dass Instandhaltungsarbeiten am Werkzeughalter erforderlich sind, möglich sind. Weiters stellt sich die Erfindung die Aufgabe, dass der Einsatz des Werkzeuges in den Sitz am Werkzeughalter, zusammen mit der Befestigung, derart ausgebildet ist, dass dieser beachtlichen Belastungen welche parallel zur Drehachse des Rotors wirken, standhält und dass das Werkzeug selbst die Einsatzbereiche am Werkzeughalter schützt so dass, zumindest an den Kontaktflächen mit dem Werkzeug und an den daran angrenzenden Bereichen, der Verschleiß verhindert wird.

Zur Lösung dieser Aufgabe schlägt die Erfindung vor ein Werkzeug und entsprechenden Werkzeughalter mit den Merkmalen des kennzeichnenden Teils des Anspruchs 1, so dass der Sitz am Werkzeughalter in welchen das Werkzeug eingesetzt wird aus zwei zueinander parallelen Flächen gebildet wird welche sich parallel zu einer radialen, durch die Drehachse des Rotors verlaufende, Linie erstrecken. Eine dieser Flächen ist die Stirnfläche der Halterung an welcher die entsprechende Rückenfläche des Werkzeuges aufliegt, während die zweite Fläche an einem vorderen Rückhaltevorsprung vorgesehen ist und auf die entsprechende Stirnfläche des Werkzeuges wirkt. Die besagten zwei Einsatzflächen sind im unteren Bereich durch eine Bodenfläche verbunden welche ebenen Verlauf haben kann und mit den anschließenden besagten Flächen rechte Winkel bildet, gebogenen Verlauf haben kann um einen wiegenförmigen Einsatzsitz zu bilden oder schrägen Verlauf haben kann um mit der Stirnfläche der Werkzeughalterung einen stumpfen Winkel zu bilden. Die Anordnung der parallelen Flächen des Sitzes für das Werkzeug ermöglicht das Einsetzen und das Entnehmen des Werkzeuges in radialer Richtung, die Belastungen welche stirnseitig auf das Werkzeug wirken werden direkt von den besagten parallelen Flächen des Werkzeughalters aufgenommen.

Das erfindungsgemäße Werkzeug ist im Bereich der beiden Seitenflächen mit Achsel einer gewissen Stärke versehen welche rückwärts, über die Rückenfläche hinaus, vorstehen. Diese Achseln überdecken bei, in den Sitz des Werkzeughalters eingesetztem Werkzeug, seitlich mit einem eventuellen Spiel den Werkzeughalter entlang den Rändern der Stirnfläche, wobei der Werkzeughalter in diesem Bereich vor Verschleiß und Verformungen geschützt wird und, in Bezug auf seitliche axiale Belastungen, widerstandsfähig und stabil wird. Die Befestigung des Werkzeuges in seinem Sitz erfolgt mittels einem einzigen Schraubenbolzen welcher eine Bohrung in der Achsel der Halterung durchdringt und in einem entsprechenden Gewindeloch am Werkzeug eingeschraubt ist. Die Position der Achse des Schraubenbolzens ist wesentlich senkrecht zur Stirnfläche des Werkzeughalters, es wird jedoch eine leicht angewinkelte Position nicht ausgeschlossen wodurch, bei Anziehen des Schraubenbolzens, eine Kraftkomponente erzeugt wird welche ein Verschieben des Werkzeuges in Richtung Boden des Sitzes erreicht wird.

Die Erfindung schließt nicht aus, an den beiden rückwärts vorspringenden Teilen der Achseln des Werkzeuges, eine Bohrung, zwecks Einsetzen und Festschrauben eines einzigen, quer durch die Werkzeughalterung gehenden und parallel zur Drehachse des Rotors verlaufenden Schraubenbolzens, vorzusehen, ohne dass eine Befestigung mittels zweier Schraubenbolzen welche in ein entsprechendes durchgehendes Gewindeloch am Werkzeughalter eingeschraubt sind, ausgeschlossen wird. Vorteilhafterweise sind in diesem Fall der Kopf oder die Köpfe des oder der Schraubenbolzen, in Befestigungsposition in den Achseln eingelassen um nicht dem Verschleiß ausgesetzt zu sein.

Die Erfindung schließt nicht aus, dass die abstehenden Achseln mit zwei Bohrungen versehen sind welche jeweils zwei durchgehenden Bohrungen am Werkzeughalter mit zur Drehachse des Rotors paralleler Achse, entsprechen.

Erfindungsgemäß ist es weiters möglich am Werkzeughalter zwei, bzw. drei, Bohrungen vorzusehen um diesen, auf diese Weise, für alle drei oben erwähnten Varianten für die Befestigung des Werkzeuges auszustatten.

Die Erfindung schlägt weiters vor, dass die Breite des Werkzeuges größer als die Stärke des Werkzeughalters ist, diese Vergrößerung der Werkzeugbreite ist abhängig von der Stärke der vom Werkzeug rückwärts abstehenden Achseln. Nachdem das Werkzeug, mindestens im Rückenbereich, größere Breite aufweist indem es über die seitlichen Ränder der Stirnfläche des Werkzeughalters vorsteht, wird erreicht, dass die unmittelbar benachbarten Bereiche des Werkzeughalters nicht der direkten Abreibung ausgesetzt sind und somit sämtliche Flächen, welche den Sitz für das Werkzeug bilden, nicht dem Verschleiß oder den Verformungen ausgesetzt sind und folglich bei jedem Austausch der Werkzeuge die ursprünglichen Zustände für den Einsatz und die Befestigung gegeben sind.

Während die Flächen des Werkzeuges und der rückwärts abstehenden Achseln welche mit den entsprechenden Flächen des Sitzes am Werkzeughalter in Kontakt sind und auch die Positionen und Abmaße der Bohrungen für die Anbringung der Schraubenbolzen entsprechen müssen, können die Flächen und die Formen der freistehenden Bereiche des Werkzeuges unterschiedlich, gegebenenfalls den unterschiedlichen spezifischen Bearbeitung welche mit der Fräse, zwecks Bodenbearbeitung, durchführbar sind, angepasst sein.

Das Ende des Kopfes der Halterung kann, im Bereich welcher der Stirnfläche entspricht, mit einer Abschrägung oder einer Abrundung versehen sein.

Die Erfindung wird anschließend, anhand einiger in den beigelegten Zeichnungen schematisch dargestellter, vorzuziehender erfindungsgemäßer Ausführungsbeispiele eines Werkzeuges und der entsprechenden, Werkzeughalterung, näher erklärt, dabei erfüllen die Darstellungen rein erklärenden, nicht begrenzenden, Zweck.

Die Fig. 1 zeigt eine perspektivische Darstellung eines Teiles des Rotors einer Fräse welcher einen erfindungsgemäßen Werkzeughalter mit eingesetztem Werkzeug aufweist, dieses ist mittels einem einzigem, die Achsel des Halters durchdringendem und im Gewindeloch des Werkzeuges eingeschraubten, Schraubenbolzen befestigt.

Die Fig. 2 zeigt die Seitenansicht eines erfindungsgemäßen Werkzeughalters mit Sitz für das Werkzeug, wobei die ebene Bodenfläche des Sitzes, mit der Stirnfläche und der Rückhaltefläche des Sitzes, rechte Winkel bildet und die Achse der, die Achsel der Halterung durchdringenden, Bohrung senkrecht zur Stirnfläche des Sitzes verläuft.

Die Fig. 3 zeigt die Seitenansicht eines erfindungsgemäßen Werkzeughalters mit wiegenförmigem Sitz für das Werkzeug und einer, die Achsel der Halterung durchdringenden Bohrung, wobei die Achse der Bohrung senkrecht zur Stirnfläche des Sitzes verläuft.

Die Fig. 4 zeigt die Seitenansicht eines erfindungsgemäßen Werkzeughalters wobei die Bodenfläche des Werkzeugsitzes mit der Stirnfläche einen stumpfen Winkel bildet und die Achse der, die Achsel der Halterung durchdringenden, Bohrung parallel zur Drehachse des Rotors ausgerichtet ist.

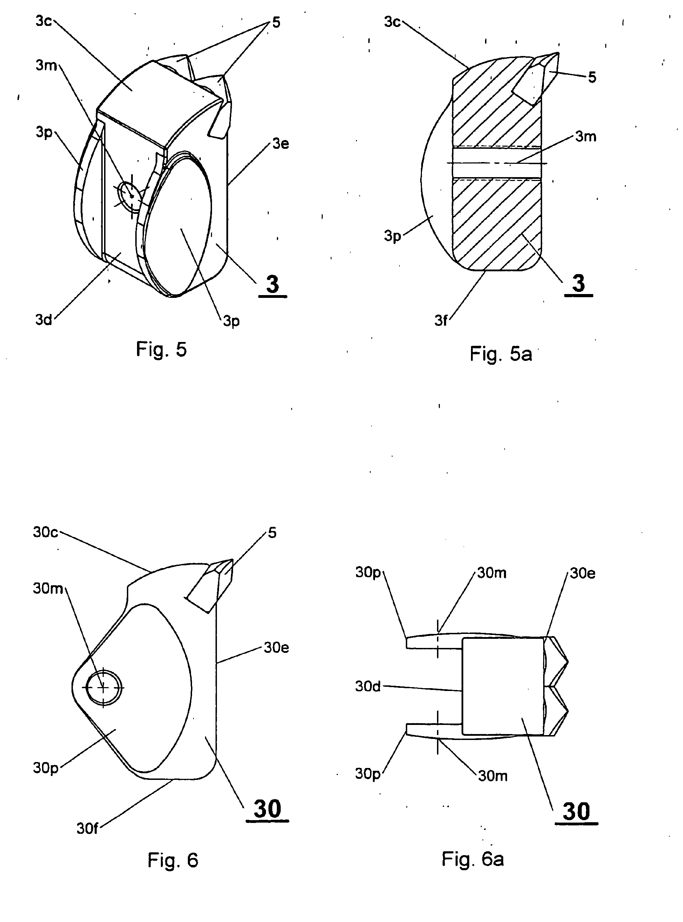

Die Fig. 5 ist eine perspektivische Darstellung in vergrößertem Maßstab des in Fig. 1 gezeigten Werkzeuges.

Die Fig. 5a ist eine Schnittdarstellung des in Fig. 5 gezeigten Werkzeuges, die Schnittfläche enthält die Achse der Gewindebohrung und verläuft parallel zu den beiden Seitenflächen des Werkzeuges.

Die Fig. 6 zeigt die Seitenansicht eines erfindungsgemäßen Werkzeuges wobei die seitlichen Achseln, Bohrungen für die Befestigung mittels Schraubenbolzen mit, zur Drehachse des Rotors parallel verlaufenden, Achsen aufweisen.

Die Fig. 6a zeigt die Draufsicht auf das in Fig. 6 dargestellte Werkzeug.

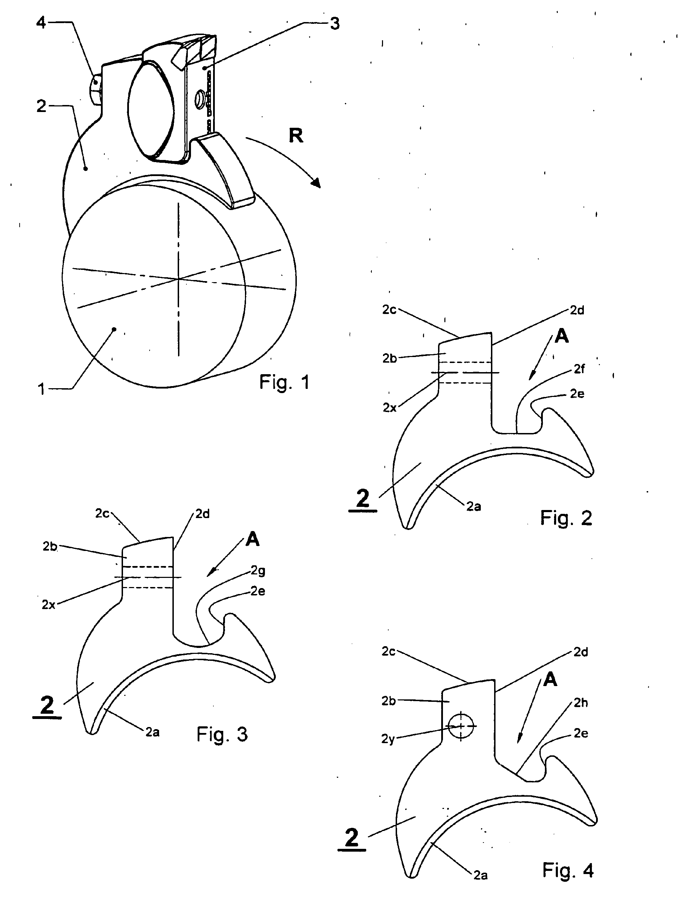

Der Rotor 1 der Fräse kann unterschiedlichen Querschnitt und verschiedene Maße aufweisen er ist außen mit mehreren Werkzeughaltern 2 versehen welche radial aus der Rotoraußenfläche abragen und versetzt zur Drehachse des Rotors 1 angeordnet sind. Die Werkzeughalter 2 können, z.B. durch Verschweißen, angebrachte Elemente sein oder mit dem Rotor 1 einstückig sein. Der Werkzeughalter 2 besteht erfindungsgemäß wesentlich aus einer vorstehenden Achsel 2b und aus einem Sitz A welcher von der Stirnfläche 2d, von der Rückhaltefläche 2e und von der ebenen Bodenfläche 2f, welche mit den Flächen 2d und 2e einen rechten Winkel bildet (Fig. 2), begrenzt wird. Diese Bodenfläche kann auch wiegenförmig 2g (Fig. 3) sein oder schräg 2h (Fig. 4) verlaufen. Der Sitz A für den Einsatz des Werkzeuges 3 erstreckt sich erfindungsgemäß wesentlich radial zur Drehachse des Rotors 1 und, sei es die Stirnfläche 2d als auch die Rückhaltefläche 2e verlaufen parallel zur radialen Erstreckung des Sitzes A und sind somit auch zueinander parallel.

Die Achsel 2b der Werkzeughalterung 2 kann erfindungsgemäß eine durchgehende Bohrung 2x deren Achse senkrecht zur Stirnfläche 2d oder leicht zum Ende 2c der Achsel angewinkelt verläuft, eine Bohrung 2y mit, zur Drehachse des Rotors, parallel verlaufender Achse oder auch zwei Bohrungen 2x, 2y deren Achsen in einer einzigen Ebene oder in beabstandeten, zueinander parallelen, Ebenen liegen, aufweisen.

Das Werkzeug 3 weist erfindungsgemäß eine Stirnfläche 3e, 30e auf, welche parallel zur Rückenfläche 3d, 30d verläuft, diese Flächen sind so angeordnet dass der Einsatz des Werkzeuges in den, durch die entsprechenden Flächen 2d, 2e definierten, Sitz A des Werkzeughalters 2, in radialer Richtung möglich ist. In Abhängigkeit des unterschiedlichen Verlaufes der Bodenflächen 2f, 2g, 2h des Sitzes A, verläuft die entsprechende untere Fläche 3f, 30f des Werkzeuges 3, 30 eben, abgerundet oder schräg. Die Breite des Werkzeuges 3 ist, zumindest im Bereich der Flächen 2d, 2e des Werkzeughalters 2, größer als die Stärke des Werkzeughalters 2 wodurch erreicht wird, dass die Kanten, bzw. die Ränder, im Bereich der Flächen 2d, 2e, 2f, 2g, 2h, während der Drehung R des Rotors 1, nicht dem direkten Abrieb und Verschleiß ausgesetzt sind. Weiters ist das Werkzeug 3, 30 an den beiden Seiten mit, rückwärts über die Rückenfläche 3d, 30d hinaus abragenden Achseln 3p, 30p versehen welche bei eingesetztem Werkzeug die seitlichen Ränder der Stirnfläche 2d des Werkzeughalters 2 abdecken. Diese Achseln 3p, 30p sichern, außer den Schutz der besagten Ränder, einen stabilen Sitz des Werkzeuges 3, 30 welcher den axial wirkenden Belastungen standhält.

Erfindungsgemäß können die seitlichen Achseln 30p mit Bohrungen 30m versehen sein welche, bei eingesetztem Werkzeug, der Bohrung 2y am Halter 2b entsprechen und deren Achse parallel zur Drehachse des Rotors 1 verläuft.

Die Befestigung des Werkzeuges 3, 30 in eingesetzter Position am Werkzeughalter 2 kann erfindungsgemäß mittels einem einzigen, die Bohrung 2x an der Achsel 2b des Werkzeughalters durchdringenden Schraubenbolzen 4, welcher in das entsprechende Gewindeloch 3m am Werkzeug 3 eingeschraubt ist, erfolgen.

Das Werkzeug 30 ist erfindungsgemäß mittels einem einzigen Schraubenbolzen befestigt welcher die Bohrungen 30m an den Achsel 30p und die Bohrung 2y am Werkzeughalter 2 durchdringt, wobei eine der Bohrungen 30m eine Gewindebohrung ist und die andere Bohrung einen Sitz für die Aufnahme des Schraubenkopfes aufweist, weiters ist es möglich die Befestigung mittels zweier Schraubenbolzen durchzuführen welche beide in die Bohrung 2y eingeschraubt sind wobei diese, in diesem Fall, eine Gewindebohrung ist.

Der Kopf des Werkzeuges 3, 30 kann unterschiedliche Form aufweisen und Schneidplättchen 5 oder andere spezifische Einsätze für die Durchführung verschiedener Bearbeitungen aufweisen, in jedem Fall ragt die Kopffläche 3c, 30c immer über die Kopffläche 2c des Werkzeughalters hinaus.

## Patentansprüche

1. Werkzeug und entsprechender Werkzeughalter für Fräsen zur Bodenbearbeitung, zur Zerkleinerung von Ästen und Büschen, zur Bodenverbesserung unbebauter Flächen, zur Pflege des Unterholzes und ähnlicher Bearbeitungen welche einen drehenden (R) Rotor (1) mit, zum Boden wesentlich parallel verlaufender, Drehachse aufweisen, wobei der Rotor (1) eine Mehrzahl von radial nach außen abragenden Werkzeughaltern (2) aufweist welche Sitze (A) für den austauschbaren Einsatz von Werkzeugen (3, 30) aufweisen, wobei das Werkzeug (3, 30) wesentlich quaderförmig ist und eine ebene Rückenfläche (3d, 30d) aufweist welche sich parallel zu einer, mindestens im unteren Bereich, nahe an der Bodenfläche (3f, 30f) welche gegenüber der mit Schneide oder Schneidplättchen (5) versehenen Kopffläche (3c, 30c) sich erstreckt, ebenen Stirnfläche (3e, 30e) verläuft, wobeidas selbe Werkzeug (3, 30) seitlich, zueinander parallele und über die Rückenfläche (3d, 30d) hinausragende, Achseln (3p, 30p) aufweist, wobei die Stärke dieser Achseln (3p, 30p) die Gesamtbreite des Werkzeuges bestimmen **dadurch gekennzeichnet, dass** der Werkzeughalter (2) einen Sitz (A) für den Einsatz des Werkzeuges (3, 30) aufweist welcher sich wesentlich radial erstreckt und durch eine, zu einer vorderen Rückhaltefläche (2e) parallelen, hinteren Stirnfläche (2d) gebildet wird wobei diese beiden Flächen parallel zum, durch die Drehachse des Rotors (1) sich erstreckenden Radius verlaufen und die Rückenfläche (3d, 30d) sowie den unteren Bereich den Stirnfläche (3e,30e) des Werkzeuges (3,30) formschlüssig aufnehmen

2. Werkzeug und entsprechender Werkzeughalter gemäß Anspruch 1, **dadurch gekennzeichnet, dass** der Sitz (A) für das Werkzeug (3, 30) eine ebene Bodenfläche (2f) aufweist welche einen rechten Winkel mit der Stirnfläche (2d) und mit der Rückhaltefläche (2e) bildet, wobei das entsprechende Werkzeug (3, 30) eine untere Fläche (3f, 30f) aufweist welche mit der Rückenfläche (3d, 30d) und der Stirnfläche (3e, 30e) rechte Winkel bildet.

3. Werkzeug und entsprechender Werkzeughalter gemäß Anspruch 1, **dadurch gekennzeichnet, dass** der Sitz (A) für das Werkzeug (3, 30) eine wiegenförmige Bodenfläche (2g) aufweist, wobei das entsprechende Werkzeug (3, 30) eine entsprechende untere Fläche aufweist.

4. Werkzeug und entsprechender Werkzeughalter gemäß Anspruch 1, **dadurch gekennzeichnet, dass** der Sitz (A) für das Werkzeug (3, 30) eine Bodenfläche (2h) aufweist welche mit der Stirnfläche (2d) einen stumpfen Winkel bildet, wobei das entsprechende Werkzeug (3, 30) eine untere Fläche aufweist welche entsprechend angewinkelt ist.

5. Werkzeug und entsprechender Werkzeughalter gemäß Anspruch 1, **dadurch gekennzeichnet, dass** die Stärke des Werkzeughalters (2), mindestens in den Bereichen welche am eingesetzten Werkzeug (3, 30) anliegen, kleiner als die maximale Stärke des Werkzeuges ist welche durch die Stärke der beiden rückwärts über die Rückenfläche (3d, 30d) hinausragenden Achseln (3p, 30p) bestimm ist, wobei die Stärke des Werkzeughalters (2), zumindest in diesen Bereichen, der Abmessung zwischen den innen liegenden Flächen der Vorsprünge der besagten Achseln (3p, 30p) entspricht oder leicht kleiner ist so dass ein gewisses Spiel zwischen den Achseln (3p, 30p) und die Flanken des Werkzeughalters (2) besteht.

6. Werkzeug und entsprechender Werkzeughalter gemäß Anspruch 1, **dadurch gekennzeichnet dass** die Befestigung des Werkzeuges (3) im entsprechenden Sitz (A) am Werkzeughalter (2) mittels einem einzigen Schraubenbolzen (4) erfolgt welcher eine Bohrung (2x), mit wesentlich senkrecht zur Stirnfläche (2d) oder leicht zum Kopf des Werkzeuges (3) angewinkelt verlaufender Achse, durchdringt und in einem entsprechenden durchgehendem Gewindeloch (3m) oder Gewindesackloch am Werkzeug (3) eingeschraubt ist.

7. Werkzeug und entsprechender Werkzeughalter gemäß Anspruch 1, **dadurch gekennzeichnet, dass** die Befestigung des Werkzeuges (30) mittels eines Schraubenbolzens erfolgt welcher eine der, an den Achseln (30p) vorgesehenen, Bohrungen (30m) und eine entsprechende Bohrung (2y) mit parallel zur Drehachse des Rotors (1) verlaufender Achse am Werkzeughalter (2) durchdringt und in die zweite Bohrung (30m), welche koaxial zur ersten angeordnet ist und ein Gewinde aufweist, eingeschraubt ist.

8. Werkzeug und entsprechender Werkzeughalter gemäß Anspruch 1 und 7, **dadurch gekennzeichnet, dass** die Befestigung des Werkzeuges (30) mittels zwei Schraubenbolzen erfolgt welche jeweils eine an den Achseln (3p) vorgesehene Bohrung (3m) durchdringt und am Werkzeugträger (2) in die entsprechende Gewindebohrung (2y) mit parallel zur Drehachse des Rotors (1) verlaufender Achse, eingeschraubt sind.

9. Werkzeug und entsprechender Werkzeughalter gemäß die Ansprüche 1, 7, 8, **dadurch gekennzeichnet, dass** jede der Achseln (30p) zwei Bohrungen (30m) aufweist welchen zwei Bohrungen (2y) am Werkzeughalter (2) entsprechen und deren Achse parallel zur Drehachse des Rotors (1) verläuft.

10. Werkzeug und entsprechender Werkzeughalter gemäß die Ansprüche 1, 7, 8, 9, **dadurch gekennzeichnet, dass** am selben Werkzeughalter (2) eine Bohrung (2x) welche senkrecht zur Kopffläche (2d) des Sitzes (A) verläuft und eine oder zwei eventuell mit Gewinde ausgestattete Bohrungen (2y) deren Achse parallel zur Drehachse des Rotors (1) verläuft, vorgesehen sind und dass die Achsen dieser Bohrungen (2x, 2y) in einer einzigen Ebene liegen welche sich parallel zur Drehachse des Rotors (1) erstreckt oder in zwei zueinander beabstandeten Ebenen liegen.

11. **Werkzeug und entsprechender Werkzeughalter gemäß Anspruch 1, dadurch gekennzeichnet, dass** das Werkzeug (30), außer den Bohrungen (30m) an den Achseln (30p), mit einer durchgehenden oder nicht durchgehenden Gewindebohrung ausgestattet ist welche senkrecht zur Rückenfläche (30d) und koaxial zur Bohrung (2x) am Werkzeughalter (2) verläuft.

## Claims

1. Tool and corresponding tool holder for cultivators for soil cultivation, for cutting up branches and bushes, for land improvement of uncultivated areas, for maintenance of the undergrowth and similar operations, which have a rotating (R) rotor (1) having a rotation axis running essentially parallel to the soil, wherein the rotor (1) has a plurality of radially outwardly projecting tool holders (1) which have seats (A) for the interchangeable insertion of tools (3, 30), wherein the tool (3, 30) is essentially parallelepiped-shaped and has a flat back surface (3d, 30d) which runs parallel to a flat end face (3e, 30e), at least in the bottom region, close to the base surface (3f, 30f), which extends opposite the head surface (3c, 30c) provided with a cutter or cutting tip (5), wherein the same tool (3, 30) has lateral shoulders (3p, 30p) which are parallel to one another and project beyond the back surface (3d, 30d), wherein the thicknesses of these shoulders (3p, 30p) determine the overall width of the tool, **characterized in that** the tool holder (2) has a seat (A) for the insertion of the tool (3, 30), said seat (A) extending essentially radially and being formed by a rear end face (2d) parallel to a front retaining surface (2e), these two surfaces running parallel to the radius extending through the rotation axis of the rotor (1) and accommodating the back surface (3d, 30d) and the bottom region of the end face (3e, 30e) of the tool (3, 30) in a positive-locking manner.

2. Tool and corresponding tool holder according to Claim 1, **characterized in that** the seat (A) for the tool (3, 30) has a flat base surface (2f) which forms a right angle with the end face (2d) and with the retaining surface (2e), the corresponding tool (3, 30) having a bottom surface (3f, 30f) which forms a right angle with the back surface (3d, 30d) and the end face (3e, 30e).

3. Tool and corresponding tool holder according to Claim 1, **characterized in that** the seat (A) for the tool (3, 30) has a cradle-shaped base surface (2g), the corresponding tool (3, 30) having a corresponding bottom surface.

4. Tool and corresponding tool holder according to Claim 1, **characterized in that** the seat (A) for the tool (3, 30) has a base surface (2h) which forms an obtuse angle with the end face (2d), the corresponding tool (3, 30) having a bottom surface which is correspondingly angled.

5. Tool and corresponding tool holder according to Claim 1, **characterized in that** the thickness of the tool holder (2), at least in the regions which bear against the inserted tool (3, 30), is less than the maximum thickness of the tool which is determined by the thickness of the two shoulders (3p, 30p) projecting rearwards beyond the back surface (3d, 30d), the thickness of the tool holder (2), at least in these regions, corresponding to or being slightly smaller than the dimension between the inner surfaces of the projections of said shoulders (3p, 30p), such that there is a certain clearance between the shoulders (3p, 30p) and the flanks of the tool holder (2).

6. Tool and corresponding tool holder according to Claim 1, **characterized in that** the tool (3) is fastened to the tool holder (2) in the corresponding seat (A) by means of a single screw bolt (4) which passes through a hole (2x) having an axis running perpendicularly to the end face (2d) or at a slight angle to the head of the tool (3) and is screwed into a corresponding tapped through-hole (3m) or tapped blind hole on the tool (3).

7. Tool and corresponding tool holder according to Claim 1, **characterized in that** the tool (30) is fastened by means of a screw bolt which passes through one of the holes (30m) provided on the shoulders (30p) and through a corresponding hole (2y), having an axis running parallel to the rotation axis of the rotor (1), on the tool holder (2) and is screwed into the second hole (30m), which is arranged coaxially to the first and has a thread.

8. Tool and corresponding tool holder according to Claims 1 and 7, **characterized in that** the tool (30) is fastened by means of two screw bolts which each pass through a hole (3m) provided on the shoulders (3p) and are screwed at the tool holder (2) into the corresponding tapped hole (2y) having an axis running parallel to the rotation axis of the rotor (1).

9. Tool and corresponding tool holder according to Claims 1, 7, 8, **characterized in that** each of the shoulders (30p) has two holes (30m), corresponding to which are two holes (2y) on the tool holder (2) and the axis of which runs parallel to the rotation axis of the rotor (1).

10. Tool and corresponding tool holder according to Claims 1, 7, 8, 9, **characterized in that** a hole (2x) which runs perpendicularly to the head surface (2d) of the seat (A) and one or two holes (2y) which are possibly provided with a thread and whose axis runs parallel to the rotation axis of the rotor (1) are provided on the same tool holder (2), and **in that** the axes of these holes (2x, 2y) lie in a single plane which extends parallel to the rotation axis of the rotor (1) or lie in two spaced-apart planes.

11. Tool and corresponding tool holder according to Claim 1, **characterized in that** the tool (30), in addition to the holes (30m) on the shoulders (30p), is provided with a tapped through-hole or with a non-continuous tapped hole which runs perpendicularly to the back surface (30d) and coaxially to the hole (2x) on the tool holder (2).

## Revendications

1. Outil et support d'outil correspondant, pour le fraisage pour le travail du sol, pour le déchiquetage de branches et de broussailles, pour l'amélioration du sol de surfaces non construites, pour l'entretien des sous-bois ou taillis et des travaux analogues, présentant un rotor (1) rotatif (R), avec un axe de rotation s'étendant sensiblement parallèlement au sol, le rotor (1) présentant une pluralité de supports d'outil (2) se projetant radialement vers l'extérieur, comprenant des sièges (A) pour l'insertion, remplaçable, d'outils (3, 30), l'outil (3, 30) étant sensiblement en forme de parallélépipède et présentant une face dorsale (3d, 30d) plane, s'étendant parallèlement à une face frontale (3e, 30e) plane, au moins dans une zone inférieure, à proximité de la surface de fond (3f, 30f) s'étendant en regard de la face de tête (3c, 30c) munie d'un tranchant ou de plaquettes de coupe (5) ; le même outil (3, 30) présentant latéralement des épaulements (3p, 30p), parallèles entre eux et sortant de la face dorsale (3d, 30d), l'épaisseur de ces épaulements (3p, 30p) déterminant la largeur globale de l'outil,
**caractérisés en ce que** le porte-outil (2) présente un siège (A) pour l'insertion de l'outil (3, 30), qui s'étend sensiblement radialement et est formé par une face frontale arrière (2d) parallèle à une face de retenue avant (2e), et où ces deux faces s'étendent parallèlement au rayon passant par l'axe de rotation du rotor (1), et reçoivent, avec une liaison à ajustement de forme, la face de retenue (3d, 30d) ainsi que la zone inférieure de la face frontale (3e, 30e) de l'outil (3, 30).

2. Outil et porte-outil correspondant selon la revendication 1, **caractérisé en ce que** le siège (A) pour l'outil (3, 30) présente une face de fond (2f) plane, formant un angle droit avec la face frontale (2d) et avec la face de retenue (2e), l'outil (3, 30) correspondant présentant une face inférieure (3f, 30f), formant un angle droit avec la face dorsale (3d, 30d) et la face frontale (3e, 30e).

3. Outil et porte-outil correspondant selon la revendication 1, **caractérisé en ce que** le siège (A) pour l'outil (3, 30) présente une face de fond (2g) en forme de berceau, l'outil (3, 30) correspondant présentant une face inférieure correspondante.

4. Outil et porte-outil correspondant selon la revendication 1, **caractérisé en ce que** le siège (A) pour l'outil (3, 30) présente une face de fond (2h) formant un angle obtus avec la face frontale (2d), l'outil (3, 30) correspondant présentant une face inférieure orientée selon un angle correspondant.

5. Outil et porte-outil correspondant selon la revendication 1, **caractérisés en ce que** l'épaisseur du porte-outil (2), au moins dans les zones en appui sur l'outil (3, 30) inséré, est inférieure à l'épaisseur maximale de l'outil, qui est déterminée par l'épaisseur des deux épaulements (3p, 30p) ressortant en arrière de la face dorsale (3d, 30d), l'épaisseur du porte-outil (2), au moins dans ces zones, correspondant à la dimension entre les faces situées intérieurement des saillies desdits épaulements (3p, 30p), ou étant légèrement inférieure, de manière qu'un certain jeu soit créé entre les épaulements (3p, 30p) et les flancs du porte-outil (2).

6. Outil et porte-outil correspondant selon la revendication 1, **caractérisés en ce que** la fixation de l'outil (3), dans le siège (A) correspondant sur le porte-outil (2), s'effectue au moyen d'un unique boulon fileté (4), traversant un perçage (2x) ayant un axe s'étendant sensiblement perpendiculairement par rapport à la face frontale (2d) ou légèrement incliné par rapport à la tête de l'outil (3), et étant vissé dans un trou taraudé (3m) continu correspondant, ou un trou borgne taraudé sur l'outil (3).

7. Outil et porte-outil correspondant selon la revendication 1, **caractérisés en ce que** la fixation de l'outil (30) se fait au moyen d'un boulon fileté, traversant l'un des perçages (30m) prévus sur les épaulements (30p) et traversant un perçage (2y) correspondant ayant un axe, s'étendant parallèlement à l'axe de rotation du rotor (1), sur le porte-outil (2) et vissé dans le deuxième perçage (30m) qui est disposé coaxialement par rapport au premier et présente un taraudage.

8. Outil et porte-outil correspondant selon les revendications 1 et 7, **caractérisés en ce que** la fixation de l'outil (30) s'effectue au moyen de deux boulons filetés, traversant chacun un perçage (3m) prévu sur les épaulements (3p) et vissés sur le porte-outil (2) dans un trou taraudé (2y) correspondant, ayant un axe s'étendant parallèlement à l'axe de rotation du rotor (1).

9. Outil et porte-outil correspondant selon les revendications 1, 7, 8, **caractérisés en ce que** chacun des épaulements (30p) présente deux perçages (30m), auxquels correspondent deux perçages (2y) sur le porte-outil (2) et dont l'axe s'étend parallèlement à l'axe de rotation du rotor (1).

10. Outil et porte-outil correspondant selon les revendications 1, 7, 8, 9, **caractérisés en ce que**, sur le même porte-outil (2) sont prévus un perçage (2x), s'étendant perpendiculairement à la face de tête (2d) du siège (A), et un ou deux perçages (2y) équipés éventuellement de taraudages, dont l'axe s'étend parallèlement à l'axe de rotation du rotor (1), et **en ce que** les axes de ces perçages (2x, 2y) sont situés en un unique plan, s'étendant parallèlement à l'axe de rotation du rotor (1), ou sont situés dans deux plans espacés l'un de l'autre.

11. Outil et porte-outil correspondant selon la revendication 1, **caractérisés en ce que** l'outil (30), outre les perçages (30m) sur les épaulements (30p), est équipé d'un perçage taraudé continu ou non continu, s'étendant perpendiculairement à la face dorsale (30d) et coaxialement au perçage (2x) sur le support d'outil (2).
